# EUROPÄISCHE PATENTSCHRIFT

(11) **EP 0 726 479 B1**
(45) Veröffentlichungstag und Bekanntmachung des Hinweises auf die Patenterteilung: **08.05.2002**
(21) Anmeldenummer: 96100889.3
(22) Anmeldetag: 23.01.1996
(51) Int. Cl.: G02B 7/182

(54) **Kippspiegelanordnung**
Tilting mirror arrangement
Arrangement d'un miroir pivotant

(30) Priorität: 11.02.1995 DE 19504568
(43) Veröffentlichungstag der Anmeldung: 14.08.1996
(73) Patentinhaber: Carl Zeiss, 89518 Heidenheim (Brenz) (DE); CARL-ZEISS-STIFTUNG, HANDELND ALS CARL ZEISS, 89518 Heidenheim (Brenz) (DE)
(72) Erfinder: Schweizer, Jürgen, Dr., D-73463 Westhofen (DE); Ludewig, Reinhard, D-89520 Heidenheim (DE)

(56) Entgegenhaltungen:
- EP-A- 0 154 870
- EP-A- 0 222 202
- US-A- 4 613 203
- DATABASE WPI Section PQ, Week 8324, Derwent Publications Ltd., London, GB; Class P81, AN 83-J0941K, XP000196938 & SU 949 618 A (KAUN POLY) 07 August 1982
- PATENT ABSTRACTS OF JAPAN vol. 009, no. 167 (P-372), 12.Juli 1985 & JP 60 043230 A (MITSUBISHI DENKI KK), 7.März 1985,
- PATENT ABSTRACTS OF JAPAN vol. 010, no. 260 (P-494), 5.September 1986 & JP 61 086722 A (JGC CORP), 2.Mai 1986,

## Beschreibung

Die Erfindung betrifft eine Kippspiegelanordnung, welche mindestens einen Kippspiegel, einen Basiskörper und mindestens eine Spiegellagerung mit festen Drehpunkt zwischen dem Kippspiegel und dem Basiskörper besitzt.

Derartige Kippspiegelanordnungen sind aus dem bekannten Stand der Technik reichlich bekannt. Sie dienen dazu, einem auf sie auffallenden Lichtstrahl definiert um einen gewissen Winkel abzulenken. Man unterscheidet insbesondere 1-achsige und 2-achsige Kippspiegel.

Während einachsige Kippspiegel heute ein marktübliches Produkt mit großer technischer Variation sind, sind zweiachsige Kippspiegel, welche heute zwar ebenfalls Stand der Technik und auf dem Markt erhältlich sind, noch bedeutenden technischen Einschränkungen unterworfen. Diese Einschränkungen sind insbesondere:
- begrenzter Kippwinkel um die x- bzw. y-Achse um normalerweise einem Winkel kleiner als 1°;
- eingeschränkte Baugröße (Dabei erfordern gewisse Kippwinkel eine gewisse Mindestbaugröße oder auch maximale Baugröße, was jeweils störend ist.);
- Baugröße der Kippspiegelanordnung deutlich größer als Spiegelfläche, insbesondere hinter der Spiegelfläche bei kleinen Kippspiegeln (d.h. mit den Spiegeln nach dem bekannten Stand der Technik sind keine hohen Packungsdichten erreichbar); oder
- komplizierte Herstellungstechnik der bekannten zweiachsigen Kippspiegel.

Aus der US-PS 4 708 420 ist eine Kippspiegelanordnung bekannt, welche zum Scannen verwendet wird. Dabei ist der Scan-Spiegel über Biegegelenke mit piezokeramischen Antriebselementen verbunden, welche parallel zur Spiegeloberfläche angeordnet sind. Damit die piezokeramischen Antriebselemente den Spiegel um einen großen Winkel kippen können, muß diese Anordnung sehr groß sein. Dies resultiert aus der geringen Verbiegung der piezokeramischen Antriebselemente, welche proportional zur Länge dieser Elemente ist. Damit ist diese Anordnung nicht dazu geeignet kleine Spiegel um einen großen Winkelbereich zu kippen, wenn der Antriebsmechanismus hinter dem Kippspiegel auf die Dimension der Spiegelfläche begrenzt sein soll.

Aus der US-PS 4 383 763 ist eine Kippspiegelanordnung bekannt, bei welchem der Spiegel auf einem Kippunkt gelagert ist und über piezoelektrische Keramiken bewegt wird. Auch hier müssen die Dimensionen des Spiegel sehr groß sein, wenn der Kippspiegel um mindestens 1° gekippt werden soll.

Aus der US-PS 4 660 941 ist eine Kippspiegelhalterung bekannt, bei welchem die Kippspiegelbewegung durch piezoelektrische Elemente erreicht wird und die piezoelektrischen Elemente wirken dabei über Hebel auf den Spiegel. Auch diese Anordnung ist nicht dazu geeignet einen kleinen Spiegel um mindestens 1° zu kippen.

Aus der US-PS 5 170 277 ist ein piezoelektrischer Strahlreflektor bekannt, bei welchem der Spiegelkörper direkt auf dem piezoelektrischen Element befestigt ist. Dies hat den Nachteil, daß der Spiegel bei einer Kippung keinen definierten Drehpunkt besitzt.

Aus der US-PS 4 691 212 ist ein piezoelektrischer Strahlreflektor bekannt, welcher in einer Scananordnung verwendet wird. Der Nachteil dieser Anordnung ist, daß ein bestimmter Ablenkwinkel nicht starr gehalten werden kann, wenn der Drehpunkt fest liegen soll.

Die US 4,613,203 zeigt einen Kippspiegel, der über ein Kreuzfedergelenk in einer Achse kippbar auf einem Basiskörper gelagert ist. Der Kippspiegel wird hierbei von mehreren am Basiskörper befestigten Elektromagneten angetrieben, die mit entsprechenden am Kippspiegel befestigten ferromagnetischen Ankern zusammenwirken.

Die SU 949 618 zeigt einen beweglichen Spiegel, der über drei Piezzoaktuatoren angetrieben werden kann. Die Piezzoaktuatoren wirken hierbei über Verlängerungen auf einen sphärisch ausgebildeten Ring, der unterhalb des Spiegels angebracht ist. Die Verlängerungen dienen gleichzeitig der Lagerung des Spiegels. Damit weist der Spiegel keinen nahezu festen Drehpunkt gegenüber dem Basiskörper auf.

Die EP-A-0 154 870 beschreibt eine Lichtablenkvorrichtung mit einem durch Punktabstützung getragenen kippbaren Teil, das eine reflektierende Spiegelfläche an seiner Oberseite aufweist.

Es ist die Aufgabe der Erfindung eine Kippspiegelanordnung zu schaffen, bei welcher der Spiegel einen festliegenden Drehpunkt hat und welche eine Bauweise ermöglicht, bei welcher der sie tragende Basiskörper nicht größer ist als die Spiegeloberfläche trotz relativ großem Kippwinkel (> 0,5°).

Außerdem soll die Einbaulage der Anordnung im Raum beliebig sein.

Diese Aufgabe wird erfindungsgemäß durch den kennzeichnenden Teil des ersten Patentanspruches gelöst.

Der besondere Vorteil der Erfindung ist, daß der erfindungsgemäße Kippspiegel eine Bauweise hat, bei welcher der sie tragende Basiskörper nicht größer ist als die Spiegeloberfläche.

Dabei kann der Kippwinkel θ trotzdem relativ groß sein (θ > 0,5°). Der Kippwinkel θ liegt dabei vorteilhafterweise im Bereich zwischen 1° < θ < 5°.

Durch die bezüglich des Drehpunktes selbstzentrierende Spiegellagerung erhält man einen festliegenden Drehpunkt.

Dabei sollte die Spiegellagerung zusätzlich reibungsarm sein, damit der Kippspiegel leicht verstellt werden kann und leicht aus einer Position in eine andere, gewünschte Position bewegt werden kann.

Die Erfindung erlaubt den Bau einer Kippspiegelanordnung, deren Spiegeldiagonale und Basisdiagonale kleiner als 4 cm ist. Zusätzlich ist es möglich, einen Kippwinkel θ größer als 0,5° zu realisieren (auch 5-10° Kippwinkel sind selbst bei Baugrößen kleiner als 10 mm Kantenlänge mit der Erfindung realisierbar).

Um jede mögliche Stellung der Kippspiegelanordnung im Raum zu ermöglichen, ist es vorgesehen, zwischen dem Kraftangriffspunkt und dem Basiskörper eine Rückhaltevorrichtung anzubringen.

Diese Rückhaltevorrichtung ist im einfachsten Fall als Feder ausgestaltet.

Bei einer Schrägstellung der Kippspiegelanordnung im Raum wirken auf den Kippspiegel Kräfte, welche ihn je nach Neigungswinkel der Kippspiegelanordnung aus seiner Grundstellung bewegen. Kennt man die Neigung der Kippspiegelanordnung während des Einsatzes des Kippspiegels, so ist es vorteilhaft, für mindestens eine vorherbestimmte Vorzugsschräglage der Kippspiegelanordnung eine Gewichtsausgleichseinrichtung für den Kippspiegel anzubringen bzw. angreifen zu lassen.

Vorteilhafter weise ist in der Kippspiegelanordnung eine krafterzeugende Einrichtung mit veränderlicher Kraftwirkung angeordnet, welche von außen angesteuert eine Veränderung des Kippwinkels θ bewirken kann. Dadurch erhält man eine hohe Dynamik des Kippwinkels und sehr kurze Reaktionszeiten.

Dabei ist es vorteilhaft, wenn an der Kippspiegelunterseite eine Verlängerung angebracht ist, auf welche die krafterzeugende Einrichtung mit veränderlicher Kraft durch Zug und/oder Druck zur Verstellung des Kippspiegels einwirken kann. Je nach Länge der Verlängerung hat man eine andere Umsetzung oder Übersetzung der einwirkenden Kraft. Diese "Übersetzung" nach dem Hebelgesetz kann man dazu verwenden, den jeweiligen Kippspiegel je nach der benötigten Verstellgenauigkeit zu dimensionieren.

Dabei sollte zumindest ein Punkt bzw. eine Fläche an der Verlängerung senkrecht zur Kippachse orientiert sein. Dieser Punkt bzw. diese Fläche kann dann als Kraftangriffspunkt bzw. -fläche verwendet werden. Dies ermöglicht einen symmetrischen Aufbau der krafterzeugenden Einrichtung.

Um die Kippspiegelanordnung kompakt zu gestalten, ist es vorteilhaft, mindestens eine krafterzeugende Einrichtung seitlich anzuordnen. Dadurch bleibt die Mitte frei und kann zur Realisierung anderer Funktionen genutzt werden.

Die krafterzeugende Einrichtung kann vorteilhafter weise als ein sich senkrecht zur Kippachse biegender Körper ausgestaltet sein, welcher an seinem unteren Ende fest an dem Basiskörper befestigt ist und welcher zwischen Biegekörper und dem Kippspiegel eine mechanische Kopplung besitzt. Dies ermöglicht eine sehr platzsparenden und kompakten Realisierung der krafterzeugenden Einrichtung.

Gestaltet man die Kopplungseinrichtung als relativ starren Körper, so kann durch die krafterzeugende Einrichtung sowohl Druck als auch Zug auf den Kippspiegel durch die krafterzeugende Einrichtung ausgeübt werden.

Die krafterzeugende Einrichtung realisiert man vorteilhafter weise durch Biege- oder Streifen-Piezoaktuatoren. Diese erzeugen bei geringer körperlicher Ausdehnungen eine ausreichende Kraftwirkung zur Verstellung des Kippspiegels, ohne daß ihre Bewegung mit einem hohen Platzbedarf in der Kippspiegelanordnung verbunden ist.

Die krafterzeugende Einrichtung kann aber auch mindestens eine Einrichtung mit veränderbarer magnetischer Feldstärke sein, welche auf einen mit dem Kippspiegel starr verbundenen Magneten Druck ausübt.

Um die Lage des Kippspiegels relativ zum Basiskörper zu ermitteln, kann man unter der Unterseite des Kippspiegels mindestens ein Detektor außerachsial zur Kippachse anordnen, dessen Meßwerte von der Stellung des Kippspiegels relativ zum Basiskörper und damit zum Detektor abhängen. Damit kann man die Bewegung des Kippspiegels in einer Achse detektieren. Verwendet man zwei außerachsial zur Kippachse angeordnete Detektoren, so kann die Stellung eines zweiachsigen Kippspiegels relativ zur Basis ermittelt werden.

Besonders vorteilhaft läßt sich die erfindungsgemäße Kippspiegelanordnung in einem Array anordnen. Durch ihre Bauform erlaubt sie eine sehr enge Anordnung.

Vorteilhafter weise ist das Array so gestaltet, daß ein weiteres, gleiches Array an allen Seiten angefügt werden kann. Dies hat bei der Bestrahlung einer großen Fläche den Vorteil, daß die zu bestrahlende Fläche in Teilflächen abgearbeitet werden kann.

Vorteilhafter weise ist das Array aus Kippspiegelanordnungen in einem Sechseckmuster angeordnet, um die teilweise gewünschten hohen Packungsdichten zu erhalten. Dies ermöglicht es in einem Umhüllungskreis möglichst viele Spiegel unterzubringen oder aber eine Fläche zu gestalten, welche nahtlos an eine entsprechend geformte Fläche auf einer Ebene angesetzt werden kann.

Vorteilhafter weise ist an der Basis ein Steg angebracht ist, wobei ein Halteteil des Stegs bis unter die Mitte der Unterseite des Kippspiegels ragt. Auf der Oberseite des Halteteils kann dann eine kegelförmige (mit einem Öffnungswinkel β) oder kugelförmigen Öffnung angebracht werden. Diese Öffnung dient als selbstzentrierende Einrichtung für den unteren Teil des Kippspiegels (z.B. ein nach unten weisender Kegel mit einem Öffnungswinkel α oder Halbkugel).

Gestaltet man den unteren Spiegelteil als Kegel mit einem Öffnungswinkel α und die Öffnung kegelförmig mit einem Öffnungswinkel β, so muß der Betragswert des Winkels β größer als der Betragswert des Winkels α sein, damit die Bewegung des Kegels in der Öffnung ungestört verlaufen kann.

Die Erfindung wird nachstehend in beispielhafterweise an Hand von Zeichnungen mehr erläutert, wobei weitere wesentliche Merkmale sowie dem besseren Verständnis dienende Erläuterung und Ausgestaltungsmöglichkeiten des Erfindungsgedankens beschrieben sind.

Dabei zeigt
- Fig. 1: eine dreidimensionale Ansichtsskizze einer zweiten Variante der erfindungsgemäßen Kippspiegelanordnung;
- Fig. 2a: einen Schnitt durch die Spiegellagerung der in Figur 1 darstellten Kippspiegelanordnung in der Y-Z-Ebene;
- Fig. 2b: einen Schnitt durch die Spiegellagerung der in Figur 1 dargestellten Kippspiegelanordnung in der X-Z-Ebene;
- Fig. 3: eine seitliche Aufschnittsskizze einer ersten Variante der erfindungsgemäßen Kippspiegelanordnung;
- Fig. 4: eine dreidimensionale Ansicht des spiegelseitigen Basiskörpers aus Fig. 3;
- Fig. 5: eine Ansicht einer dritten Variante der erfindungsgemäßen Kippspiegelanordnung aus Fig. 3 mit Positionssensoren;
- Fig. 6: eine vierte Variante der erfindungsgemäßen Kippspiegelanordnung mit einer anderen krafterzeugenden Einrichtung in seitlicher Ansicht und
- Fig. 6a: einen Schnitt durch die Anordnung aus Figur 6.

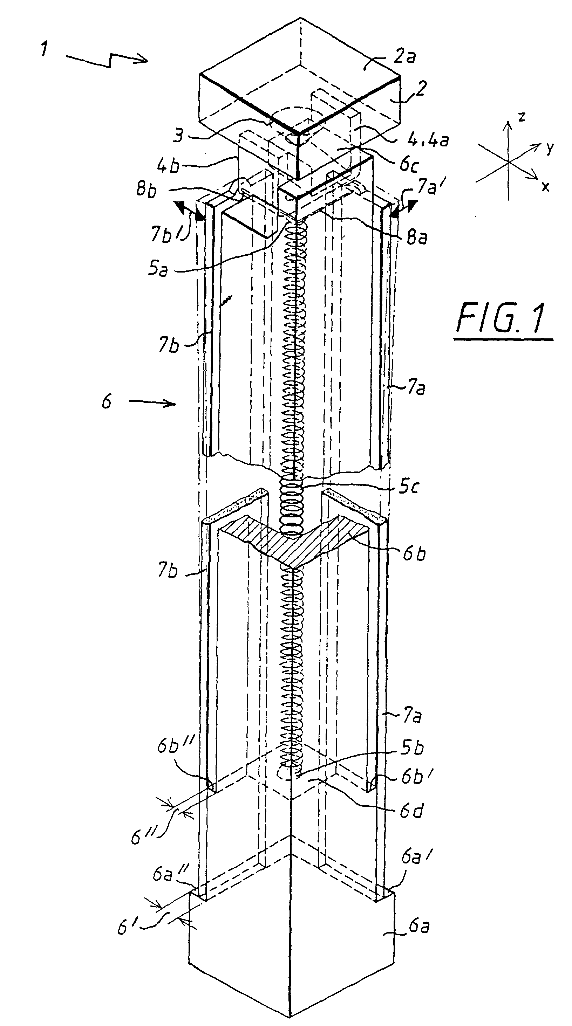

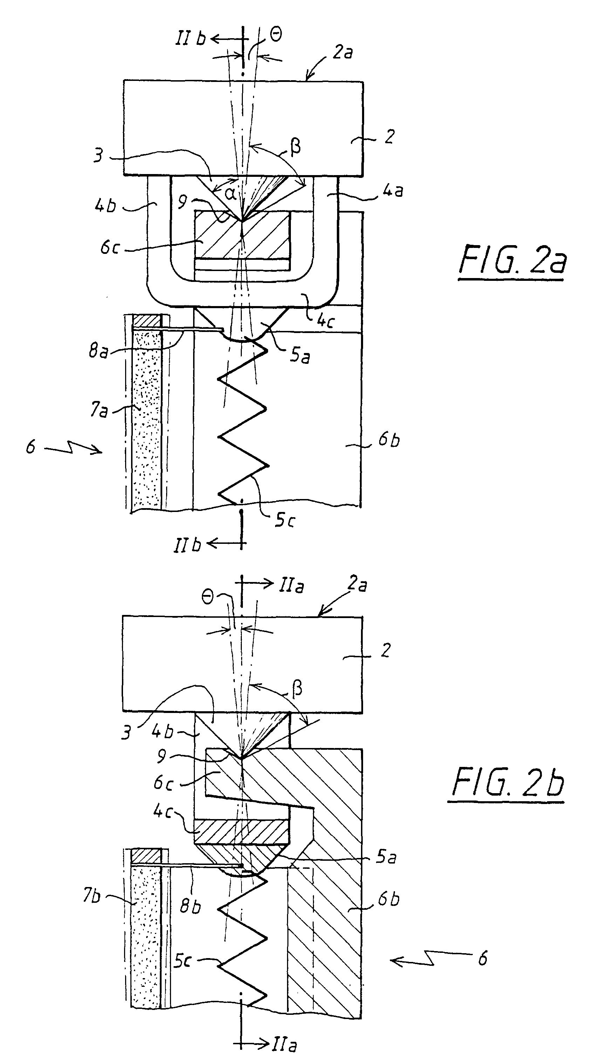

Die in Fig. 1, 2a und 2b darstellte Kippspiegelanordnung (1) besteht aus einem Kippspiegel (2), welcher eine verspiegelte Oberfläche (2a) besitzt. Auf der Unterseite besitzt der Kippspiegel (2) auf seiner Mitte einen nach unten orientierten Kreiskegel (3) mit einem Öffnungswinkel α, dessen Spitze zum Basiskörper (6) zeigt.

Seitlich des Kreiskegels (3) sind zwei Stege (4a, 4b) angeordnet, welche durch einen dritten Steg (4c) miteinander verbunden sind. Unterhalb des Stegs (4c) befindet sich ein Halterungskörper (5a), welcher in den Steg (4c) integriert oder auf diesen aufgesetzt ist. Die drei Stege (4a-c) sind so dimensioniert ist, daß sie einen in die Mitte ragenden Teil (6c) des Basiskörpers (6) mit einem genügend großen Freiraum umgreifen. Dieser Freiraum ist notwendig, damit der Spiegel (2) seine Bewegungen ausführen kann. Die beiden Stege (4a-b) können auch durch eine geschlitzte Rohrhülse erzeugt werden.

Die abgerundete Spitze des Kreiskegels (3) liegt in einer abgerundeten kegelförmigen Öffnung (9) mit einem Öffnungswinkel β, wobei sich diese kegelförmige Öffnung (9) auf der Oberseite des in die Mitte tragenden Teils (6c) des Basiskörpers (6) befindet. Der Winkel β der Öffnung (9) ist dabei größer als der Winkel α des Kreiskegels (3), damit es zu einer freien Bewegung des Kreiskegels (3) in der Öffnung (9) im gesamten gewünschten Winkelbereich θ des Spiegels (2) kommen kann.

Damit hat der Kippspiegel (2) eine Lagerung mit drei rotatorischen Freiheitsgraden. Die Spitze des Kreiskegels (3) und die Spitze der kegelförmige Öffnung (9) haben wohldefinierte Radien derart, daß bei einer Rotation des Kippspiegels (2) um die x- bzw. y-Achse eine reine abrollende Bewegung des Kreiskegels (3) auf der Öffnung (9) auftritt.

Diese Art der Lagerung ist punktförmig, selbstzentrierend und instabil und legt den Drehpunkt des Kippspiegels (2) eindeutig fest. Sie erlaubt Kippwinkel von +/- 5° und mehr. Geeignete Werkstoffe für diese schmierstoff-freie Lagerung sind z.B. Glas, Saphir, Diamant, Bor-Nitrid-gehärteter Stahl usw. für die abgerundete Basis der kegelförmigen Öffnung (9) bzw. für die abgerundete Spitze des Kreiskegels (3).

Der in die Mitte des Basiskörpers (6) ragende Teil (6c) des Basiskörpers (6) wird seitlich durch einen L-förmigen Träger (6b) getragen, welcher mit einem Grundkörper (6a) verbunden ist.

Der Grundkörper (6a) besitzt in seinem unteren Teil zwei seitliche Ausnehmungen (6a' und 6a''). Weiter oben sind zwei weitere seitliche Ausnehmungen (6b'und 6b'') angeordnet. Auf der Höhe der zweiten seitlichen Ausnehmungen (6b'und 6b'') bildet der Basiskörper (6) eine flache Plateaufläche (6d), auf welchem sich ein weiterer Halterungskörper (5b) befindet.

An den seitlichen Flächen zwischen den beiden Ausnehmungen (6a'und 6b') bzw. (6a'' und 6b'') ist jeweils ein Streifen-Piezoaktuator (7a, 7b) befestigt. Diese Streifen-Piezoaktuatoren (7a, 7b) nennt man auch Biege-Piezoaktuatoren. Zur Durchführung der Konstruktion eignen sich alle bekannten länglichen Bauelemente, welche sich kontrolliert, von außen gesteuert verbiegen lassen.

Die Streifen-Piezoaktuatoren (7a, 7b) liegen an ihrem unteren Ende direkt am Basiskörper (6) an und auf einer Fläche (6') der Ausnehmung (6a', 6a'') auf, wobei zum Rand des Basiskörpers (6) noch ein gewisser Abstand bleibt. Ein entsprechender Abstand (6'') der Streifen-Piezoaktuatoren (7a, 7b) besteht auch zwischen dem L-förmigen Träger (6b) und den Streifen-Piezoaktuatoren (7a, 7b).

Diese Abstände werden benötigt, damit sich die Streifen-Piezoaktuatoren (7a, 7b) bei angelegter Spannung verbiegen können, ohne seitlich aus der Fläche des Basiskörpers (6) auszutreten. Dadurch wird sichergestellt, daß die maximal benötigte Breite durch die Grundfläche des Basiskörpers (6) gegeben ist, welche nur unwesentlich größer ist als die Spiegelfläche (2a) (bei 5° Neigung ungefähr 5%).

Die Biege- oder Streifen-Piezoaktuatoren (7a, 7b) sind an den zwei Seiten des Basiskörpers (6) bis in die Höhe des Halterungskörpers (5b) befestigt (z.B. geklebt, gelötet, usw.), d.h. zwischen den beiden Ausnehmungen (6a'und 6b') bzw. (6a'' und 6b''). Die Streifen-Aktuatoren (7a, 7b) sind jeweils mittels dünner Verbindungselemente (8a, 8b) mit dem oberen Halterungskörper (5a) verbunden. Die Verbindungselemente (8) erlauben in diesem Beispiel sowohl eine Zug- als auch eine Druckkraft, müssen also eine gewisse Steifigkeit aufweisen (z.B. Stahldraht ab einem gewissen Durchmesser und bis zu einer gewissen Länge).

Zwischen den beiden Halterungskörpern (5a und 5b) befindet sich eine Feder (5c) welche als Rückhaltevorrichtung für den Kippspiegel (2) dient.

Wird nun an einem der beiden Streifen-Piezoaktuator (7a) eine elektrische Spannung angelegt, so biegt sich dieser in eine Richtung (7a') in Abhängigkeit vom Vorzeichen der Spannung (ähnlich einem Bimetallstreifen bei Erwärmung). Über die Kraftkopplung (8a) wird der Halterungskörper (5a) in einer Richtung (7a') bewegt, was zu einer Bewegung des Kippspiegels (2) führt. Die Auslenkung der Streifen-Piezoaktuatoren (7a, 7b) ist näherungsweise proportional der angelegten elektrischen Spannung, so daß durch eine Variation der angelegten Spannung an dem oder den Aktuatoren (7a, 7b) eine gesteuerte Bewegung des Kippspiegels (2) um die x- oder y-Achse erreicht wird. Verändert man hingegen die Spannung nicht, so bleibt der Spiegel (2) in der gewünschten Position (wenn man den Spannungsdrift vernachlässigt bzw. ausgleicht).

Wird an den Streifen-Piezoaktuator (7a) eine entgegengesetzte Spannung angelegt, so bewegt er sich entgegen der oben beschriebenen Richtung (7a') und nimmt dabei den Halterungskörper (5a) und damit den Kippspiegel (2) mit.

Damit ist eine Bewegung des Kippspiegels (2) in einer Achse um den Winkel θ ermöglicht. Durch den zweiten Streifen-Piezoaktuator (7b) ist eine Bewegung des Kippspiegels (2) in einer dazu senkrechten Achse (Richtung 7b') möglich.

Damit ist aber eine Kippspiegelanordnung (1) mit einer Lagerung und einer krafterzeugenden Einrichtung (7a, 7b) realisiert, in welcher ein Spiegelkörper (2) in zwei zueinander senkrecht stehenden Achsen bewegt werden kann. Der Wert des Winkels θ kann dabei zwischen wenigen Bogensekunden und ± 10° liegen.

Bei der Dimensionierung des Kreiskegels (3) bzw. der kegelförmigen Öffnung (9) ist es sehr vorteilhaft, wenn der Winkel β größer ist als der Winkel α, damit die Bewegung des Spiegels (2) nicht durch die Öffnung (9) gestört wird. Außerdem ist es sehr vorteilhaft, wenn die Kegelspitze des Kreiskegels (3) abgerundet ist und auch der Boden der kegelförmigen Öffnung (9) eine Kugelschalenform besitzt, damit es zu einer abrollenden Bewegung der Kegelspitze auf dem Boden der Öffnung kommt und sich die Kegelspitze bei mehrfacher Benutzung des Spiegels (2) nicht in die Oberfläche der Öffnung "einbohrt".

Die besonderen Vorteile der in der Figur 1 dargestellten Anordnung sind darin zu sehen, daß die Baugröße der Anordnung in der Spiegelebene und dahinter nicht oder nur unwesentlich größer sein muß als die Spiegelfläche (2a). Dabei hat die zweiachsige Kippspiegelanordnung (1) eine kleine Spiegelfläche (2a), deren Kantenlänge kleiner als 40 mm beträgt aber größer als 3 mm ist.

Die Kippspiegelanordnung zeichnet sich desweiteren durch einen relativ großen Kippwinkel von mindestens ca. +/- 5° um jede Achse aus. Dabei erlaubt die kompakte Bauweise der Kippspiegelanordnung den Zusammenbau vieler gleichartiger Kippspiegelanordnungen zu einem segmentierten großen flachen oder konischen Spiegel, welcher durch eine preiswerte Massenproduktion herstellbar ist.

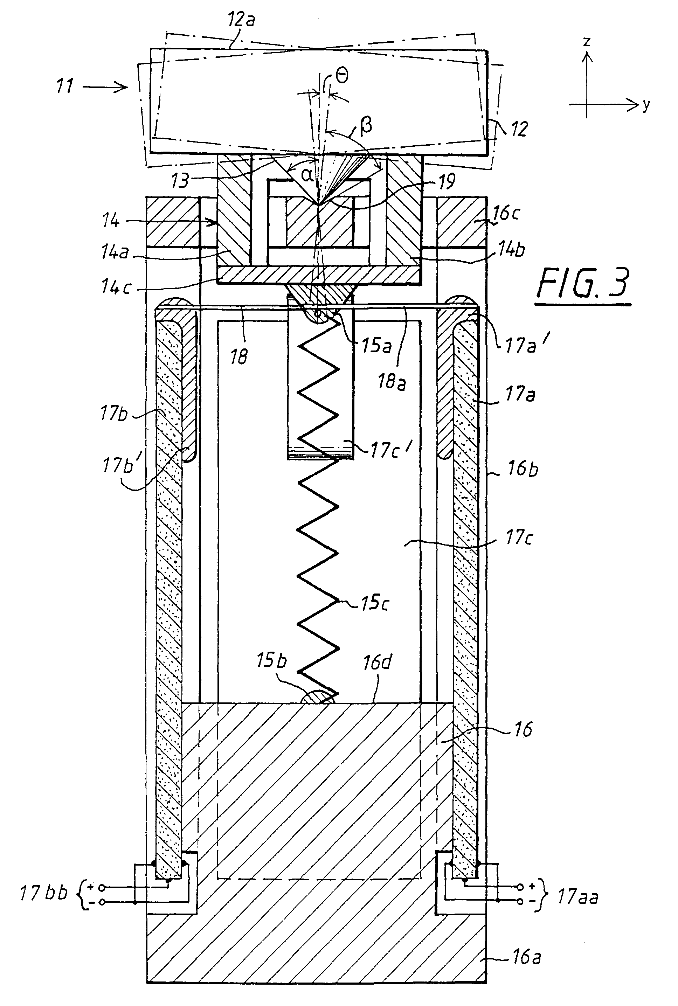

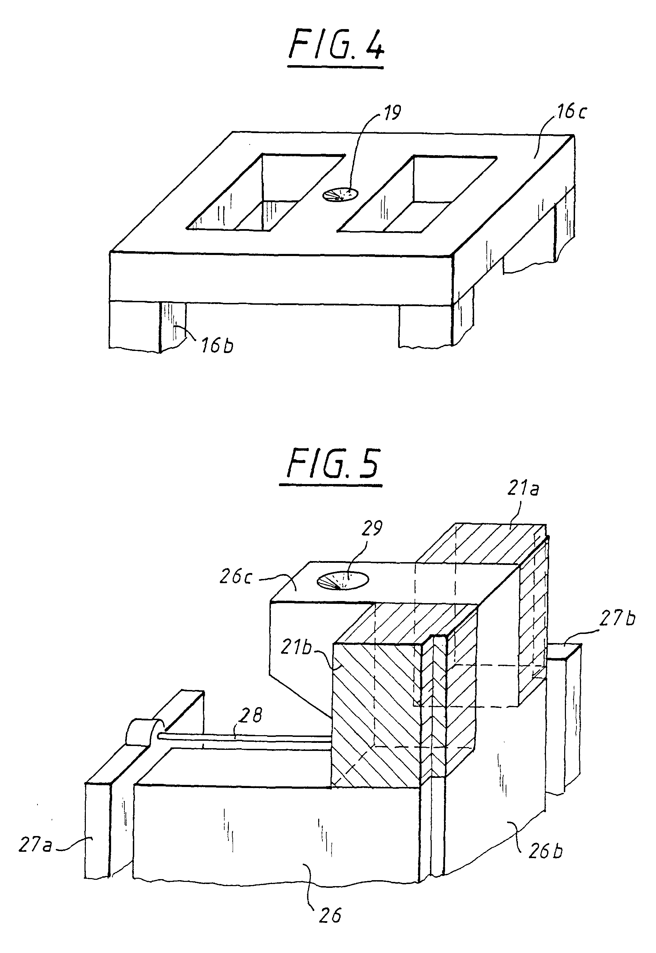

In den Figuren 3 und 4 ist eine zweite Variante einer erfindungsgemäßen Kippspiegelanordnung (11) dargestellt, welche der in den Figuren 1 und 2ab dargestellten Variante sehr ähnlich ist.

Auch hier besitzt der Kippspiegel (12) eine verspiegelte Oberfläche (12a) auf der einen Seite und auf der anderen Seite einen Kreiskegel (13) mit einem Öffnungswinkel α. Um den Kreiskegel (13) sind zwei Stege (14a, 14b) angebracht, welche durch einen dritten Steg (14c) miteinander verbunden sind. An der Unterseite des dritten Steges (14c) befindet sich ein Halterungskörper (15a). Die drei Stege (14a-c) bilden somit einen U-förmigen Körper (14), auf welchen die krafterzeugende Einrichtung einwirkt und nach dem Hebelgesetz eine Bewegung des Kippspiegels (12) veranlaßt.

Die abgerundete Spitze des Kreiskegels (13) liegt in einer kegelförmigen Öffnung (19) mit einem Öffnungswinkel β. Dieser Öffnungswinkel β ist größer als der Winkel α und die Unterseite der kegelförmigen Öffnung ist abgerundet. Die kegelförmige Öffnung befindet sich auf der Oberseite des oberen Basiskörperteils (16c). Dieses obere Basiskörperteil (16c) ist in der Figur 4 noch einmal detailliert dargestellt. Damit entspricht die hier dargestellte der in den Figuren 1, 2a und 2b dargestellten Spiegellagerung, so daß an dieser Stelle zur konkreten Ausgestaltung auf die obige Beschreibung verwiesen werden kann.

An den Halterungskörper (15a) sind vier dünne Verbindungselemente (18a, 18b; die anderen beiden Verbindungselemente sind nicht sichtbar) angebracht, welche mit einer Lötstelle (17a', 17b'; die anderen beiden Lötstellen sind nicht sichtbar) an jeweils einem Streifen-Piezoaktuator (17a, 17b; die anderen beiden Streifen-Piezoaktuatoren sind nicht sichtbar) befestigt sind. In diesem Beispiel müssen die Verbindungselemente (18) nur die eine Zugkraft übertragen können, da vier Streifen-Piezoaktuatoren (17), d.h. für jede Achse zwei, vorhanden sind. Sie können also aus einem elastischen Material (z.B. Stahldraht bis zu einem gewissen Durchmesser ab einer gewissen Länge) bestehen oder aber starr sein.

Diese Streifen-Piezoaktuatoren (17a, 17b; die anderen beiden Streifen-Piezoaktuatoren sind nicht sichtbar) sind an dem Basiskörper (16a) im unteren Teil fest angebracht und dienen zur Bewegung des Kippspiegels (12) in einer Achse um einen Winkel θ. Im Winkel von jeweils 90° sind zwei weitere Streifen-Piezoaktuatoren (17c, 17d) (in der Figur nicht dargestellt) angebracht. Auch diese sind mit Verbindungselementen (18) an den Halterungskörper befestigt. Durch die vier Verbindungselemente (18) ist der Kippspiegel (12) räumlich fixiert.

Zusätzlich befindet sich am oberen Halterungskörper (15a) eine Zugfeder (15c), welche an ihrem anderen Ende an einem unteren Halterungskörper (15b) befestigt ist, welcher sich auf der Oberfläche (16d) des unteren Basiskörpers (16a) befindet. Diese Feder (15c) dient als Rückhaltevorrichtung. Sie sichert die Fixierung des Kippspiegels (12) zusätzlich, so daß der Spiegel (12) auch "auf dem Kopf stehend" bzw. in beliebiger räumlicher Orientierung bewegt werden kann.

In der Figur sind auch die elektrischen Anschlüsse (17aa, 17bb) der beiden Streifen-Piezoaktuatoren (17a, 17b) dargestellt. Die elektrischen Anschlüsse der um 90° versetzt angeordneten Streifen-Piezoaktuatoren (17c, 17d) sind in der Figur 3 nicht sichtbar.

Wie in der Figur 4 sichtbar besteht der obere Basiskörperteil (16c) aus einem quadratischen Stück, in welchem zwei rechteckförmige Aussparungen eingefräst sind auf dem sich zwischen den Aussparungen ergebenden mittleren Steg ist die kegelförmige Öffnung (19) angebracht.

Unter dem oberen Basiskörperteil (16c) befindet sich jeweils ein Basiskörperteilträger (16b), welche für eine sichere Lagerung des oberen Basiskörperteils (16c) auf dem unteren Basiskörperteil (16a) sorgen.

Eine dritte Variante ist in der Figur 5 dargestellt. Diese Variante zeichnet sich dadurch aus, daß an der Oberseite des Basiskörper (26) mindestens zwei Kipplagen-Detektoren (21a, 21b) angeordnet sind (z.B. Näherungssensoren). Die krafterzeugende Einrichtung (27a, 27b), die kegelförmige Öffnung (29), das in die Mitte ragende Teil (26c) des Basiskörpers (26) und die Verbindungselemente (28) sind zu den vorherigen Figuren bereits beschrieben worden. Desweiteren ist bereits die Lage des hier aus Übersichtlichkeitsgründen nicht dargestellten Kippspiegels auf der Spiegellagerung eingehend erläutert worden. Die Anordnung ist im wesentlichen also genauso aufgebaut wie die Anordnung in den Figuren 1 und 2a, 2b, nur daß hier Positionsdetektoren auf dem Basiskörper (26) die momentane Lage des nicht dargestellten Kippspiegels ermitteln.

Dies hat den Vorteil, daß man die räumliche Lage der verspiegelten Oberfläche des Kippspiegels in Relation zum Basiskörper (26) detektieren kann und einen nach dem Stand der Technik bekannten Regelkreis verwenden kann um den Spiegel eine gewünschte räumliche Lage einnehmen zu lassen.

Bei dem geregelten Kippspiegel erfolgt die Eingabe einer Sollbewegung in einen Steuerrechner, welcher eine Steuerspannung erzeugt. Diese Steuerspannung gelangt zu den Streifen-Piezoaktuatoren, deren Bewegung auf den Kippspiegel übertragen wird. Die Kipplagendetektoren erfassen diese Kippbewegung und erzeugen eine Meßspannung, welche zum Steuerrechner gelangt. Aus dem Vergleich von Soll- und Ist-Wert errechnet dieser dann eine Korrekturspannung, mit welcher die Steuerspannung korrigiert wird.

Durch die Erfindung ist es somit möglich eine lagegeregelte zweiachsige Kippspiegelanordnung zu schaffen,
- deren Baugröße in x-y-Richtung nicht größer ist als die Spiegelplatte (wobei diese kleiner als 10 mm sein kann) ;
- welche herstellungstechnisch einfach ist;
- welche somit (relativ) preiswert herstellbar ist; und
- welche einen Kippwinkel von +/- 5° und mehr aufweisen kann.

Dabei liegt der Drehpunkt relativ nahe an der Spiegeloberfläche, wodurch die seitliche Auswanderung des Kippspiegels bei Kippung sehr klein gehalten werden kann (z.B. bei dem in Figur 3 dargestellten Kippspiegel beträgt die seitliche Auslenkung bei 5° Kippwinkel maximal 5% einer Basisseitenlänge). Die Lage des Spiegeldrehpunktes ist dabei abhängig von der Dicke des Kippspiegels und der Dimensionierung der Stege unter dem Kippspiegel.

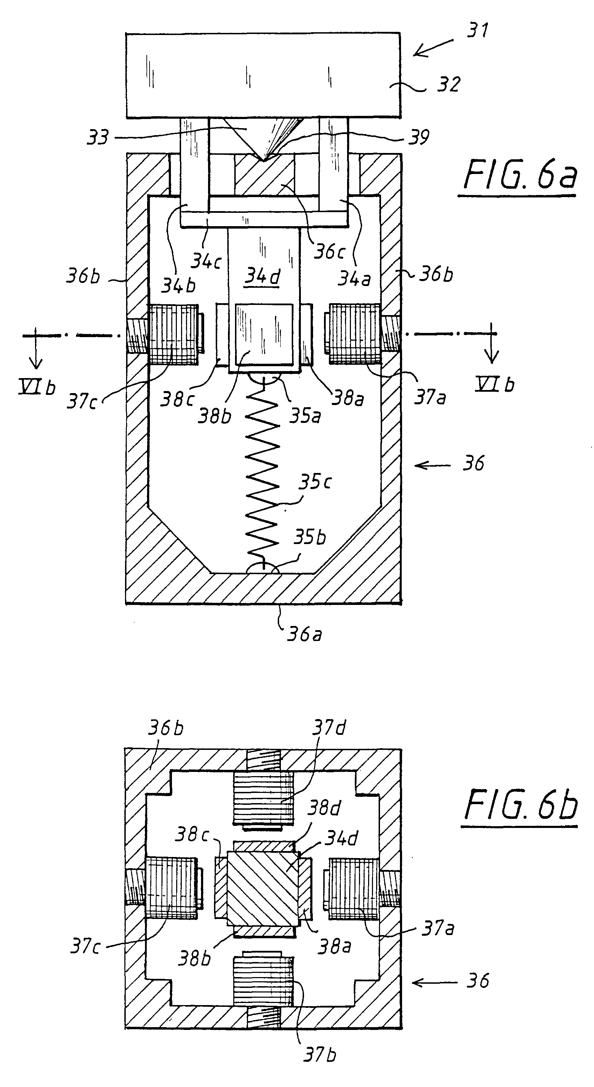

Die in den Figuren 6 und 6a dargestellte vierte Version der Kippspiegelanordnung (31) besitzt als Antriebselemente bzw. krafterzeugende Einrichtung keine Streifen-Piezoaktuatoren.

Der Kippspiegel (32) besitzt wieder einen Kreiskegel (33) an seiner Unterseite. Seitlich dieses Kreiskegels (33) sind zwei Stege (34a, 34b) angeordnet, welche durch einen dritten Steg (34c) miteinander verbunden sind. Insoweit entspricht diese Version der Version in den vorhergehenden Darstellungen.

Unterhalb des Querstegs (34c) befindet sich ein weiterer Haltekörper (34d), an welchen vier Permanentmagnete (38a-38d) seitlich sich gegenüberliegend angebracht sind. Unterhalb des Haltekörpers (34d) befindet sich ein Halterungskörper (35a), an welchem das obere Ende einer Feder (35c) angebracht ist. Das untere Ende der Feder (35c) ist an einem unteren Halterungskörper (35b) angebracht, welcher sich auf einer Fläche des Basiskörpers befindet. Der Basiskörper (36) besitzt vier seitliche Stege (36b), zwischen welchen jeweils eine Spule (37a-37d) angebracht ist. Die Spulen (37a-37d) liegen dabei auf der Höhe der Permanentmagneten (38a-38d).

Leitet man nun einen Strom durch z.B. die Spule (37a), so wirkt die Spule (37a) so, daß der Permanentmagnet (38a) von der Spule (37a) abgestoßen wird. Dadurch wird der Kippspiegel (32) bewegt. Jenachdem, wie die Spulen (37a-37d) nun mit mehr oder weniger Strom versorgt werden, bewegt sich der Kippspiegel (32) in unterschiedliche Kipprichtungen.

Die in den Ecken des Basiskörpers (36) angeordneten Stege (36b) tragen den in die Mitte des Basiskörpers (36) ragenden Steg (36c) mit der kegelförmigen Öffnung (39) zur Lagerung des Kreiskegels (33) des Kippspiegels (32).

Verzichtet man auf die Kippwinkeldetektoren, so kann ein Regelkreis auch dadurch aufgebaut werden, daß die Lage des reflektierten Strahls detektiert wird. Dies kann z.B. durch einen Strahlenteiler geschehen, welcher hinter der Kippspiegelanordnung angebracht ist und welcher einen Teil der auf ihn fallenden Strahlung auf eine optische Meßanordnung (z.B. ein Flächendetektorarray) ablenkt. Wird dort eine Abweichung des Ist-Wertes vom gewünschten Soll-Wert ermittelt, so veranlaßt die optische Meßanordnung ein Signal zur Ansteuerung der Kippspiegelanordnung (31), bis der Kippspiegel (32) die gewünschte Lage eingenommen hat.

Die verwendbaren einbaubaren Sensoren zur Erfassung des Kippwinkels aus Figur 5 können beispielsweise beschafft werden von
- Kaman Instrumentation Measuring Systems, 1500 Garden of the Gods Road, Colorado Springs, Colorado 80907 USA als Displacement measuring Systems KD-2300-.5SU, bzw. andere Sensoren aus den Baureihen KD-2300/2310/2350; oder von
- Micro-Epsilon Messtechnik GmbH & Co. KG, Königbacher Straße 15, D-8359 Ortenburg-Dorfbach, Deutschland unter der Bezeichnung U05.08 bzw. U05.10 bzw. U05.12.

Die Streifen-Piezoaktuatoren aus den Figuren 1-5 können z.B. beschafft werden von
- Hoechst CeramTec aus Deutschland und werden dort als monolithische Vielschichtaktuatoren oder auch als piezoelektrische Biegeelemente bezeichnet.

Die Erfindung soll auf eine Punktlagerung des Kippspiegels auf einem Basiskörper beschränkt sein. Wichtig ist dabei, daß die Lagerung möglichst reibungsfrei ist und keine ruckartigen Bewegungen bei der Einleitung einer Bewegung erfolgen.

Die krafterzeugenden Einrichtung kann aus Biege- oder Streifen-Piezoaktuatoren oder aus Spulen und Magneten bestehen. Als krafterzeugende Einrichtung eignen sich alle eine Kraft erzeugende Einrichtungen, welche entsprechend kompakt gebaut werden können und bei welchen die Krafterzeugung zu einer Bewegung führt (z.B. elektrische Linearmotoren, Gas-, Flüssigkeits- oder sonstwie bewegte Kolben, usw.).

Die Rückhaltevorrichtung kann aus einer Feder oder aus einem anderen Element bestehen, welches in der Lage ist dafür zu sorgen, daß der Kippspiegel in keiner Schräglage sich unkontrolliert vom Basiskörper entfernt. Z.B. ist auch eine Rückhaltevorrichtung denkbar, bei welcher die zurückhaltenden Kräfte durch Felder (z.B. magnetische) erzeugt werden.

Eine Gewichtsausgleichseinrichtung um den Drehpunkt ist sinnvoll, wenn die Kippspiegelanordnung in einer definierten Schräglage betrieben wird. Sie sorgt dann dafür, daß die dabei auftretenden Gewichtskräfte, welche den Kippspiegel aus seiner Ruhelage bringen, aufgefangen werden und nicht durch die krafterzeugende Einrichtung abgefangen werden müssen. Diese Gewichtsausgleichseinrichtung kann in dem Beispiel in Figur 6 dadurch realisiert werden, daß eine oder zwei Spulen permanent eine gewisse Vorspannung erhalten in Abhängigkeit von der relativen Lage der Kippspiegelanordnung.

Als Kipplagendetektor sind nicht nur solche Detektoren verwendbar, welche eine Abstandsmessung durchführen. Je nach konkreter Ausgestaltung der Erfindung in einer konkreten Kippspiegelanordnung sind auch Sensoren zur Lagedetektion verwendbar, die ein vom Kippspiegel ausgehendes Feld (z.B. ein magnetisches Feld) detektieren, wenn die Feldstärke abhängig ist von dem Kippwinkel.

Als Array zur Anordnung mehrerer Kippspiegelanordnungen nebeneinander kann jedes räumliche Array verwendet werden, welches für die Apparatur benötigt wird, in welcher die Kippspiegelanordnungen letztendlich eingesetzt werden. Dabei brauchen die Spiegelflächen nicht unbedingt direkt aneinander liegen, sondern können auch senkrecht zur Spiegelebene versetzt angeordnet sein.

Dabei muß der Basiskörper nicht unbedingt rechteckförmig sein. Bei der Formgebung des Basiskörpers und damit des Kippspiegels sollte aber darauf geachtet werden, daß das Array der Kippspiegelanordnungen eine große Packungsdichte hat, da dies einer der besonderen Vorteile der erfindungsgemäßen Kippspiegelanordnung ist.

Die aneinander gefügten Kippspiegelanordnungen müssen auch nicht alle die gleiche Größe haben, da die einzelnen Kippspiegelanordnungen diskret angesteuert werden können.

Werden z.B. nicht parallele (sich aufweitende bzw. konvergierende) Strahlenbündel mit einem gewissen Abstand zueinander verwendet, so kann man durch eine Veränderung der räumlichen Position der spiegelnden Fläche im Raum eine gewisse Zoomwirkung erzielen. Die dazu notwendige Lageveränderungseinrichtung kann dabei nach dem bekannten Stand der Technik ausgeführt sein.

## Patentansprüche

1. Kippspiegelanordnung, welche mindestens einen Kippspiegel (2) mit einer ebenen Spiegelfläche (2a), einen Basiskörper (6) und eine Spiegellagerung mit festem Drehpunkt zwischen dem Kippspiegel und dem Basiskörper besitzt, wobei der Kippspiegel eine Spiegeldiagonale kleiner 40 mm Länge aufweist und wobei die Anordnung Kippspiegel, Lagerung und Basiskörper derart unterhalb der Spiegeloberfläche angeordnet ist, daß sie in der Projektion der Spiegelebene nicht oder bei Auslenkung des Kippspiegels nur unwesentlich über diese hinausragt, **dadurch gekennzeichnet, daß** der Kippspiegel (2) über ein Punktlager (3, 9) auf dem Basiskörper (6) gelagert ist, wobei zum Erzeugen einer den Spiegel auf den Basiskörper zurückhaltenden Kraft zwischen dem Kippspiegel und dem Basiskörper eine Rückhaltevorrichtung (5c) die den festen Drehpunkt zwischen dem Kippspiegel und dem Basiskörper auch bei beliebiger Schräglage der Kippspiegelanordnung im Raum sicherstellt, angebracht ist.

2. Kippspiegelanordnung nach Anspruch 1, **dadurch gekennzeichnet, daß** die Spiegellagerung bezüglich des Drehpunktes selbstzentrierend ist.

3. Kippspiegelanordnung nach einem der Ansprüche 1-2, **dadurch gekennzeichnet, daß** der Kippspiegel und der Basiskörper eine viereckige Kontur aufweisen und die Spiegeldiagonale und die Basisdiagonale kleiner als 15 mm ist.

4. Kippspiegelanordnung nach einem der Ansprüche 1-3, **dadurch gekennzeichnet, daß** der Kippwinkel θ größer als 0,5° ist.

5. Kippspiegelanordnung nach Anspruch 1, **dadurch gekennzeichnet, daß** die Rückhaltevorrichtung (5c) als Feder ausgestaltet ist.

6. Kippspiegelanordnung nach einem der Ansprüche 1-5, **dadurch gekennzeichnet, daß** für mindestens eine vorherbestimmte Vorzugsschräglage der Kippspiegelanordnung eine Gewichtsausgleichseinrichtung für den Kippspiegel angebracht bzw. angreifend ist.

7. Kippspiegelanordnung nach einem der Ansprüche 1-6, **dadurch gekennzeichnet, daß** in der Kippspiegelanordnung eine krafterzeugende Einrichtung (7a, 7b) mit veränderlicher Kraftwirkung angeordnet ist, welche von außen angesteuert eine Veränderung des Kippwinkels θ bewirkt.

8. Kippspiegelanordnung nach Anspruch 7, **dadurch gekennzeichnet, daß** an der Kippspiegelunterseite eine Verlängerung (4, 14) angebracht ist, auf welche die krafterzeugende Einrichtung mit veränderlicher Kraftwirkung wirkt.

9. Kippspiegelanordnung nach einem der Ansprüche 7-8, **dadurch gekennzeichnet, daß** die krafterzeugende Einrichtung ein sich senkrecht zur Kippachse biegender Körper ist, welcher an seinem unteren Ende fest an dem Basiskörper befestigt ist, und daß zwischen Biegekörper und dem Kippspiegel eine mechanische Kopplung (8a, 8b) angebracht ist.

10. Kippspiegelanordnung nach einem der Ansprüche 1-9, **dadurch gekennzeichnet, daß** die Spiegellagerung zumindest reibungsarm ist.

11. Kippspiegelanordnung nach einem der Ansprüche 7-10, **dadurch gekennzeichnet, daß** die krafterzeugende Einrichtung (7a, 7b) ein Biege- oder Streifen-Piezoaktuator ist.

12. Kippspiegelanordnung nach einem der Ansprüche 7-10, **dadurch gekennzeichnet, daß** die krafterzeugende Einrichtung mindestens eine Einrichtung (37a, 37c) mit veränderbarer magnetischer Feldstärke ist und daß an dem Kippspiegel zumindest ein starr befestigter Magnet (38a, 38b) in der Höhe einer ihn bewegen könnenden Spule angeordnet ist.

13. Kippspiegelanordnung nach einem der Ansprüche 1-12, **dadurch gekennzeichnet, daß** unter der Unterseite des Kippspiegels mindestens ein Kipplagendetektor (21a, 21b) außerachsial zur Kippachse angeordnet ist.

14. Array aus Kippspiegelanordnungen, **dadurch gekennzeichnet, daß** viele der Kippspiegelanordnungen nach einem der Ansprüche 1-13 in einem Array angeordnet sind.

15. Array aus Kippspiegelanordnungen nach Anspruch 14, **dadurch gekennzeichnet, daß** das Array so gestaltet ist, daß ein weiteres, gleiches Array an allen Seiten angefügt werden kann.

16. Array aus Kippspiegelanordnungen nach Anspruch 14, **dadurch gekennzeichnet, daß** das Array aus Kippspiegelanordnungen in einem Sechseckmuster angeordnet ist.

17. Kippspiegelanordnung nach einem der Ansprüche 1-16, **dadurch gekennzeichnet, daß** an dem Basiskörper ein Steg angebracht ist, daß ein Halteteil (6c) des Stegs bis unter die Mitte der Unterseite des Kippspiegels ragend ist, daß auf der Oberseite des Halteteils eine kegelförmige Öffnung (9) mit einem Öffnungswinkel β angebracht ist, daß unter dem Kippspiegel ein nach unten weisender Kegel (3) mit einem Öffnungswinkel α angebracht ist, und daß der Betragswert des Winkels α kleiner als der Betragswert des Winkels β ist.

## Claims

1. Tilting mirror arrangement which has at least one tilting mirror (2) with a flat mirror surface (2a), a base body (6) and a mirror bearing with a fixed fulcrum between the tilting mirror and the base body, the tilting mirror having a mirror diagonal of less than 40 mm, and the arrangement of tilting mirror, bearing and base body being arranged below the mirror surface in such a way that it does not extend beyond the projection of the mirror plane or does so only insignificantly upon deflection of the tilting mirror, **characterized in that** the tilting mirror (2) is mounted on the base body (6) via a point bearing (3, 9), a retaining device (5c) which secures the fixed fulcrum between the tilting mirror and the base body even in the event of an arbitrary inclined position of the tilting mirror arrangement in space being fitted in order to produce a force, retaining the mirror on the base body, between the tilting mirror and the base body.

2. Tilting mirror arrangement according to Claim 1, **characterized in that** the mirror bearing is selfcentring with reference to the fulcrum.

3. Tilting mirror arrangement according to one of Claims 1-2, **characterized in that** the tilting mirror and the base body have a rectangular contour, and the mirror diagonal and the base diagonal are smaller than 15 mm.

4. Tilting mirror arrangement according to one of Claims 1-3, **characterized in that** the tilting angle θ is greater than 0.5°.

5. Tilting mirror arrangement according to Claim 1, **characterized in that** the retaining device (5c) is configured as a spring.

6. Tilting mirror arrangement according to one of Claims 1-5, **characterized in that** for at least one predetermined preferred inclined position of the tilting mirror arrangement a balancing device for the tilting mirror is fitted or acts.

7. Tilting mirror arrangement according to one of Claims 1-6, **characterized in that** arranged in the tilting mirror arrangement is a force-producing device (7a, 7b) with a variable force action which, driven from outside, effects a variation in the tilting angle θ.

8. Tilting mirror arrangement according to Claim 7, **characterized in that** provided on the underside of the tilting mirror is an extension (4, 14) on which the force-producing device acts with a variable force action.

9. Tilting mirror arrangement according to one of Claims 7-8, **characterized in that** the force-producing device is a body which bends perpendicular to the tilting axis and is fastened permanently at its lower end to the base body, and **in that** a mechanical coupling (8a, 8b) is fitted between the bending body and the tilting mirror.

10. Tilting mirror arrangement according to one of Claims 1-9, **characterized in that** the mirror bearing is at least of low friction.

11. Tilting mirror arrangement according to one of Claims 7-10, **characterized in that** the force-producing device (7a, 7b) is a bending or strip piezoelectric actuator.

12. Tilting mirror arrangement according to one of Claims 7-10, **characterized in that** the force-producing device is at least one device (37a, 37c) with a variable magnetic field strength, and **in that** at least one rigidly fastened magnet (38a, 38b) is arranged on the tilting mirror at the level of a coil capable of moving it.

13. Tilting mirror arrangement according to one of Claims 1-12, **characterized in that** at least one tilting position detector (21a, 21b) is arranged extra-axially relative to the tilting axis below the underside of the tilting mirror.

14. Array of tilting mirror arrangements, **characterized in that** many of the tilting mirror arrangements according to one of Claims 1-13 are arranged in an array.

15. Array of tilting mirror arrangements according to Claim 14, **characterized in that** the array is fashioned such that a further, identical array can be attached on all sides.

16. Array of tilting mirror arrangements according to Claim 14, **characterized in that** the array of tilting mirror arrangements is arranged in a hexagonal pattern.

17. Tilting mirror arrangement according to one of Claims 1-16, **characterized in that** a web is fitted on the base body, **in that** a holding part (6c) of the web projects as far as below the middle of the underside of the tilting mirror, **in that** a conical opening (9) with an aperture angle of β is provided on the top side of the holding part, **in that** a downwardly pointing cone (3) with an aperture angle of α is fitted below the tilting mirror, and **in that** the absolute value of the angle α is smaller than the absolute value of the angle β.

## Revendications

1. Arrangement d'un miroir pivotant qui possède au moins un miroir pivotant (2) muni d'une surface réfléchissante plane (2a), un corps de base (6) et un support de miroir avec un point de rotation fixe entre le miroir pivotant et le corps de base, le miroir pivotant présentant des diagonales de miroir inférieures à 40 mm de long et l'arrangement miroir pivotant, support et corps de base étant disposé sous la surface du miroir de telle manière qu'il ne dépasse pas de la projection du plan du miroir ou seulement de manière insignifiante en cas d'excursion du miroir pivotant, **caractérisé en ce que** le miroir pivotant (2) est supporté par un support ponctuel (3, 9) sur le corps de base (6), un dispositif de retenue (5C) étant installé entre le miroir pivotant et le corps de base pour produire une force retenant le miroir sur le corps de base, lequel assure le point de rotation fixe entre le miroir pivotant et le corps de base même avec une position inclinée quelconque de l'arrangement de miroir pivotant dans l'espace.

2. Arrangement d'un miroir pivotant selon la revendication 1, **caractérisé en ce que** le support du miroir est à auto-centrage par rapport au point de rotation.

3. Arrangement d'un miroir pivotant selon l'une des revendications 1-2, **caractérisé en ce que** le miroir pivotant et le corps de base présentent un contour rectangulaire et les diagonales du miroir et les diagonales de base sont inférieures à 15 mm.

4. Arrangement d'un miroir pivotant selon l'une des revendications 1-3, **caractérisé en ce que** l'angle de pivotement θ est supérieur à 0,5°.

5. Arrangement d'un miroir pivotant selon la revendication 1, **caractérisé en ce que** le dispositif de retenue (5c) est réalisé sous la forme d'un ressort.

6. Arrangement d'un miroir pivotant selon l'une des revendications 1-5, **caractérisé en ce qu'**un dispositif de compensation du poids est installé ou peut intervenir pour le miroir pivotant pour au moins une position inclinée préférentielle préalablement définie de l'arrangement de miroir pivotant.

7. Arrangement d'un miroir pivotant selon l'une des revendications 1-6, **caractérisé en ce qu'**un dispositif de production de force (7a, 7b) à effet de force variable est disposé dans l'arrangement de miroir pivotant, lequel est commandé depuis l'extérieur et provoque une modification de l'angle de pivotement θ.

8. Arrangement d'un miroir pivotant selon la revendication 7, **caractérisé en ce qu'**un prolongateur (4, 14) sur lequel agit le dispositif de production de force à effet de force variable est installé sur le dessous du miroir pivotant.

9. Arrangement d'un miroir pivotant selon l'une des revendications 7-8, **caractérisé en ce que** le dispositif de production de force est un corps flexible perpendiculaire à l'axe de pivotement dont l'extrémité inférieure est fixée à demeure au corps de base et qu'un accouplement mécanique (8a, 8b) est logé entre le corps flexible et le miroir pivotant.

10. Arrangement d'un miroir pivotant selon l'une des revendications 1-9, **caractérisé en ce que** le support du miroir est au moins à faible frottement.

11. Arrangement d'un miroir pivotant selon l'une des revendications 7-10, **caractérisé en ce que** le dispositif de production de force (7a, 7b) est un actionneur piézoélectrique à flexion ou à frottement.

12. Arrangement d'un miroir pivotant selon l'une des revendications 7-10, **caractérisé en ce que** le dispositif de production de force est au moins un dispositif (37a, 37c) à intensité de champ magnétique variable et qu'au moins un aimant (38a, 38b) fixé à demeure est disposé sur le miroir pivotant à hauteur d'une bobine qui peut le faire bouger.

13. Arrangement d'un miroir pivotant selon l'une des revendications 1-12, **caractérisé en ce qu'**au moins un détecteur de position de pivotement (21a, 21b) est disposé de manière extra-axiale par rapport à l'axe de pivotement sous le dessous du miroir pivotant.

14. Réseau d'arrangements de miroir pivotant, **caractérisé en ce que** de nombreux des arrangements de miroir pivotant selon l'une des revendications 1-13 sont disposés en réseau.

15. Réseau d'arrangements de miroir pivotant selon la revendication 14, **caractérisé en ce que** le réseau est configuré de telle manière qu'un réseau supplémentaire identique puisse être rajouté de tous les côtés.

16. Réseau d'arrangements de miroir pivotant selon la revendication 14, **caractérisé en ce que** le réseau d'arrangements de miroir pivotant est disposé selon un modèle hexagonal.

17. Arrangement d'un miroir pivotant selon l'une des revendications 1-16, **caractérisé en ce qu'**un montant est fixé au corps de base, qu'un élément de maintien (6c) du montant dépasse jusque sous le centre du dessous du miroir pivotant, qu'un orifice conique (9) ayant un angle d'ouverture β se trouve sur le dessus de l'élément de maintien, qu'un cône (3) dirigé vers le bas ayant un angle d'ouverture α se trouve sous le miroir pivotant et que la valeur de l'angle α est inférieure à la valeur de l'angle β.
